# EUROPEAN PATENT APPLICATION

(11) **EP 3 859 852 A1**
(43) Date of publication of application: **04.08.2021**
(21) Application number: 19864085.6
(22) Date of filing: 30.08.2019
(51) Int. Cl.: H01M 10/04, H01M 2/38, H01M 10/26, H01M 10/28, H01M 10/30

(54) **SECONDARY BATTERY**

(30) Priority: 28.09.2018 JP 2018185439
(71) Applicant: Kyocera Corporation, Kyoto-shi, Kyoto 612-8501 (JP)
(72) Inventor: HOSOMI, Kazunori, Kyoto-shi, Kyoto 612-8501 (JP); OHKUMA, Takeshi, Kyoto-shi, Kyoto 612-8501 (JP)
(74) Representative: TBK
(86) International application number: PCT/JP2019/034311
(87) International publication number: WO 2020/066465

(57) **Abstract**

A secondary battery according to an embodiment includes a container, an electrolytic solution, a cathode and an anode, and a flow mechanism. The container has an opening on a bottom surface thereof. The electrolytic solution is disposed in the container. The cathode and the anode are disposed in the electrolytic solution. The flow mechanism has a generation part that is connected to the container via the opening and generates a gas bubble(s) in the container through the opening, and that causes the electrolytic solution to flow. A protrusion part that is positioned at an edge part of the opening and extends in upward and downward directions is disposed on the bottom surface.

## Description

### Field

A disclosed embodiment(s) relate(s) to a secondary battery.

### Background

A secondary battery has conventionally been known that circulates an electrolytic solution that contains a tetrahydroxy zincate ion ([Zn(OH)₄]²⁻) between a cathode and an anode.

### Citation List

### Non Patent Literature

Non Patent Literature 1: Y. Ito. et al.: Zinc morphology in zinc-nickel flow assisted batteries and impact on performance, Journal of Power Sources, Vol. 196, pp. 2340-2345, 2011

### Summary

A secondary battery according to an aspect of an embodiment(s) includes a container, an electrolytic solution, a cathode and an anode, and a flow mechanism. The container has an opening on a bottom surface thereof. The electrolytic solution is disposed in the container. The cathode and the anode are disposed in the electrolytic solution. The flow mechanism has a generation part that is connected to the container via the opening and generates a gas bubble(s) in the container through the opening, and that causes the electrolytic solution to flow. A protrusion part that is positioned at an edge part of the opening and extends in upward and downward directions is disposed on the bottom surface.

### Brief Description of Drawings

FIG. 1 is a diagram that illustrates an outline of a secondary battery according to a first embodiment.
FIG. 2 is a cross-sectional view that illustrates an outline of a protrusion part that is included in a secondary battery according to a first embodiment.
FIG. 3 is a diagram that explains an example of connection between electrodes of a secondary battery according to a first embodiment.
FIG. 4 is a diagram that illustrates an outline of a secondary battery according to a second embodiment.
FIG. 5 is a top view that illustrates an outline of a visor member that is included in a secondary battery according to a second embodiment.
FIG. 6 is a cross-sectional view that illustrates an outline of a visor member that is included in a secondary battery according to a second embodiment.
FIG. 7 is a cross-sectional view that illustrates an outline of a visor member that is included in a secondary battery according to a first variation of a second embodiment.
FIG. 8A is a cross-sectional view that illustrates an outline of a visor member that is included in a secondary battery according to a second variation of a second embodiment.
FIG. 8B is a cross-sectional view that illustrates an outline of a visor member that is included in a secondary battery according to a second variation of a second embodiment.
FIG. 8C is a cross-sectional view that illustrates an outline of a visor member that is included in a secondary battery according to a second variation of a second embodiment.
FIG. 9A is a cross-sectional view that illustrates an outline of a visor member that is included in a secondary battery according to a third variation of a second embodiment.
FIG. 9B is a cross-sectional view that illustrates an outline of a visor member that is included in a secondary battery according to a fourth variation of a second embodiment.
FIG. 9C is a cross-sectional view that illustrates an outline of a visor member that is included in a secondary battery according to a fifth variation of a second embodiment.
FIG. 10A is a cross-sectional view that illustrates an outline of a visor member that is included in a secondary battery according to a sixth variation of a second embodiment.
FIG. 10B is a cross-sectional view that illustrates an outline of a visor member that is included in a secondary battery according to a seventh variation of a second embodiment.
FIG. 11 is a diagram that illustrates an outline of a secondary battery according to a third embodiment.
FIG. 12 is a cross-sectional view that illustrates an outline of a generation member that is included in a secondary battery according to a third embodiment. Description of Embodiments

Hereinafter, an embodiment(s) of a secondary battery as disclosed in the present application will be explained in detail with reference to the accompanying drawing(s). Additionally, this invention is not limited by an embodiment(s) as illustrated below.

### <First Embodiment>

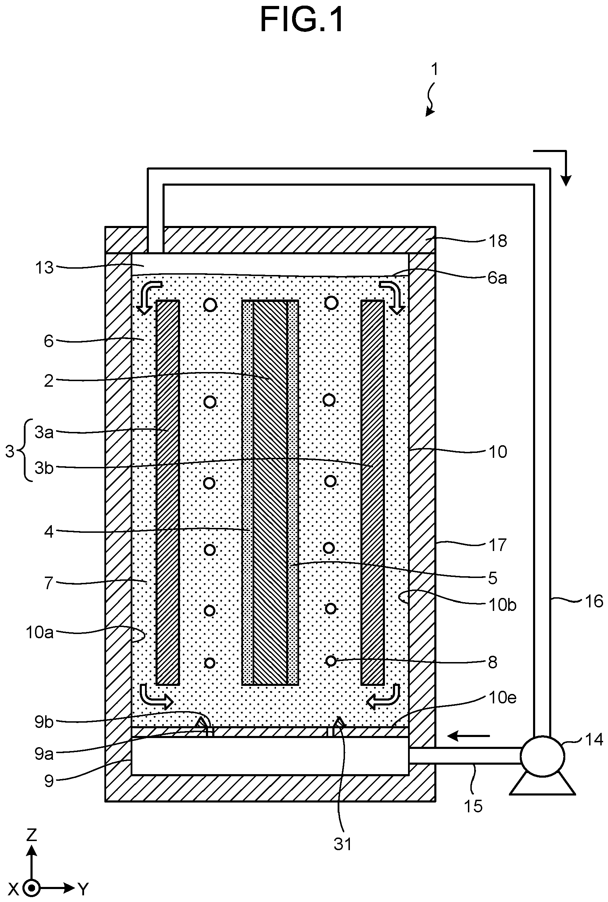

FIG. 1 is a diagram that illustrates an outline of a secondary battery according to a first embodiment. A secondary battery 1 as illustrated in FIG. 1 includes a container 17. The container 17 has a recess part 10. It is possible for the recess part 10 to store an electrolytic solution 6. In the electrolytic solution 6, a cathode 2, an anode 3, and diaphragms 4, 5 are disposed. The recess part 10 is a space or room where power generation or charging is executed. Hereinafter, the recess part 10 is also referred to as a reaction part 10. Additionally, a powder 7 may be added to the electrolytic solution 6.

The secondary battery 1 has a flow mechanism for causing the electrolytic solution 6 to flow. The present embodiment has a generation part 9 that is communicated with the reaction part 10 through an opening 9a (that is also referred to as a discharge port) that is positioned on a bottom surface of the reaction part 10. Then, a gas is supplied from a supply part 14 that is connected to the generation part 9 to the generation part 9, and thereby, a supplied gas floats up as a gas bubble(s) in the reaction part 10 from the opening 9a. As a result, it is possible for the flow mechanism to cause the electrolytic solution 6 in the recess part 10 to flow. Additionally, the generation part 9 is a space or room for generating a gas bubble(s) in the recess part 10.

Additionally, for sake of simplicity of explanation, FIG. 1 illustrates a three-dimensional orthogonal coordinate system that includes a Z-axis where a vertically upward direction is provided as a positive direction and a vertically downward direction is provided as a negative direction. Such an orthogonal coordinate system may also be illustrated in another/other drawing(s) that is/are used for an explanation as described later.

The cathode 2 is, for example, an electrically conductive member that contains a nickel compound, a manganese compound, or a cobalt compound as a cathode active material. For a nickel compound, it is possible to use, for example, nickel oxyhydroxide, nickel hydroxide, a cobalt-compound-containing nickel hydroxide, or the like. For a manganese compound, it is possible to use, for example, manganese dioxide or the like. For a cobalt compound, it is possible to use, for example, cobalt hydroxide, cobalt oxyhydroxide, or the like. Furthermore, the cathode 2 may include graphite, carbon black, an electrically conductive resin, or the like. From a viewpoint of an oxidation-reduction potential where the electrolytic solution 6 is decomposed, the cathode 2 may contain a nickel compound. Furthermore, the cathode 2 may be of metallic nickel, metallic cobalt, or metallic manganese, or an alloy thereof.

Furthermore, the cathode 2 includes, for example, a cathode active material as described above, an electrical conductor, and/or another/other additive(s), as a plurality of granular bodies. Specifically, it is possible to use, for example, the cathode 2 that is provided by pressing a pasty cathode material that contains a granular active material and an electrical conductor that are compounded in a predetermined proportion, together with a binder that contributes to a shape retention property, into a foam metal that has an electrical conductivity such as foam nickel, molding it into a desired shape, and drying it.

The anode 3 includes an anode active material as a metal. For the anode 3, it is possible to use, for example, a metal plate of a stainless one, copper, or the like, or a stainless or copper plate with a surface that is plate-processed with nickel, tin, or zinc. Furthermore, a plate-processed surface that is partially oxidized may be used as the anode 3.

The anode 3 includes an anode 3a and an anode 3b that are arranged so as to interpose the cathode 2 therebetween and face one another. The cathode 2 and the anode 3 are arranged in such a manner that the anode 3a, the cathode 2, and the anode 3b are sequentially aligned at a predetermined interval(s) along a direction of a Y-axis. Thus, each interval is provided between the cathode 2 and the anode 3 that are adjacent thereto, so that flow paths of the electrolytic solution 6 and a gas bubble(s) 8 between the cathode 2 and the anode 3 are ensured. Additionally, in a case where the anode 3a and the anode 3b are explained without distinction thereof, explanation may be provided as the anode 3 simply, regardless of illustration thereof.

The diaphragms 4, 5 are arranged so as to interpose therebetween both sides of the cathode 2 in a thickness direction thereof, that is, a direction of a Y-axis. A diaphragm 4, 5 is composed of a material that allows movement of an ion(s) that is/are included in the electrolytic solution 6. Specifically, for a material of the diaphragm 4, 5, it is possible to provide, for example, an anion conductive material in such a manner that the diaphragm 4, 5 has a hydroxide ion conductivity. For an anion conductive material, it is possible to provide, for example, a gel-like anion conductive material that has a three-dimensional structure such as an organic hydrogel, a solid polymer type anion conductive material, or the like. A solid polymer type anion conductive material includes, for example, a polymer and at least one compound that is selected from a group that is composed of an oxide, a hydroxide, a layered double hydroxide, a sulfate compound, and a phosphate compound that contain at least one kind of element that is selected from Group 1 to Group 17 of a periodic table.

Preferably, the diaphragm 4, 5 is composed of a dense material so as to suppress penetration of a metal ion complex such as [Zn(OH)₄]²⁻ with an ionic radius that is greater than that of a hydroxide ion and has a predetermined thickness. For a dense material, it is possible to provide, for example, a material that has a relative density of 90% or greater, more preferably 92% or greater, and even more preferably 95% or greater, that is calculated by an Archimedes' method. A predetermined thickness is, for example, 10 µm to 1000 µm, and more preferably 50 µm to 500 µm.

In such a case, it is possible to reduce growing of zinc that is deposited on an anode 3a, 3b as a dendrite (a needle crystal) and penetrating thereof through the diaphragm 4, 5, at a time of charging. As a result, it is possible to reduce conduction between the anode 3 and the cathode 2 that face one another.

The electrolytic solution 6 is an alkali aqueous solution that contains 6 mol·dm⁻³ or more of an alkali metal. An alkali metal is, for example, potassium. Specifically, it is possible to use, for example, a 6 to 6.7 mol·dm⁻³ aqueous solution of potassium hydroxide as the electrolytic solution 6. Furthermore, an alkali metal such as lithium or sodium may be added as a hydroxide (lithium hydroxide or sodium hydroxide) for a purpose of suppression of oxygen generation.

Furthermore, the electrolytic solution 6 contains a zinc component. A zinc component is dissolved as [Zn(OH)₄]²⁻ in the electrolytic solution 6. For a zinc component, it is possible to use, for example, zinc oxide or zinc hydroxide. Furthermore, it is possible to prepare the electrolytic solution 6 by adding ZnO to 1 dm³ of an aqueous solution of potassium hydroxide at a proportion of 0.5 mol and adding the powder 7 as describe later thereto as needed. For example, it is possible for the electrolytic solution 6 that is unused or provided after an end of discharging to contain 1 × 10⁻⁴ mol·dm⁻³ or more and 5 × 10⁻² mol·dm⁻³ or less, and preferably 1 × 10⁻³ mol·dm⁻³ or more and 2.5 × 10⁻² mol·dm⁻³ or less, of a zinc component.

The powder 7 includes zinc. Specifically, the powder 7 is, for example, zinc oxide, zinc hydroxide, or the like that is processed into or produced in a powder form. Although the powder 7 is readily dissolved in an alkali aqueous solution, it is not dissolved in the electrolytic solution 6 that is saturated with a zinc species but is dispersed or floats therein and is mixed in the electrolytic solution 6 in a state where a part thereof is precipitated. In a case where the electrolytic solution 6 is left to stand for a long period of time, a state where most of the powder 7 is precipitated in the electrolytic solution 6 may be provided, and if convection or the like is caused in the electrolytic solution 6, a state where a part of the precipitated powder 7 is dispersed or floats in the electrolytic solution 6 is provided. That is, the powder 7 is present in the electrolytic solution 6 so as to be moveable therein. Additionally, "movable" herein does not indicate that it is possible for the powder 7 to move in only a local space that is produced between it and another surrounding powder 7, but indicates that the powder 7 moves to another position in the electrolytic solution 6 so that the powder 7 is exposed to the electrolytic solution 6 other than that at an original position thereof. Moreover, a category of "movable" includes the powder 7 that is capable of moving to neighborhood of both the cathode 2 and the anode 3 or the powder 7 that is capable of moving to almost everywhere in the electrolytic solution 6 that is present in the container 17. As [Zn(OH)₄]²⁻ that is dissolved in the electrolytic solution 6 is consumed, the powder 7 that is mixed in the electrolytic solution 6 is dissolved in such a manner that [Zn(OH)₄]²⁻ that is dissolved in the electrolytic solution 6 approaches a saturation concentration thereof so that the powder 7 and the electrolytic solution 6 mutually maintain an equilibrium state thereof. It is possible for the powder 7 to adjust a concentration of zinc in the electrolytic solution 6 and maintain a high ion conductivity of the electrolytic solution 6.

A gas bubble(s) 8 is/are composed of, for example, a gas that is inert against the cathode 2, the anode 3, and the electrolytic solution 6. For such a gas, it is possible to provide, for example, a nitrogen gas, a helium gas, a neon gas, an argon gas, or the like. A gas bubble(s) 8 of a gas that is inert against the electrolytic solution 6 is/are generated, so that it is possible to reduce modification of the electrolytic solution 6. Furthermore, for example, it is possible to reduce degradation of the electrolytic solution 6 that is an alkali aqueous solution that contains a zinc species and maintain a high ion conductivity of the electrolytic solution 6. Additionally, a gas may contain air.

The generation part 9 is arranged below the reaction part 10. An inside of the generation part 9 is hollow in such a manner that a gas that is supplied from the supply part 14 as described later is stored temporarily. Furthermore, an inside bottom 10e of the reaction part 10 is arranged so as to cover a hollow part of the generation part 9 and serves as a top plate of the generation part 9.

Furthermore, the inside bottom 10e has openings (that will be referred to as discharge ports below) 9b of a plurality of communicating holes 9a that are aligned along a direction of an X-axis and a direction of a Y-axis. The generation part 9 discharges, from the discharge ports 9b, a gas that is supplied from the supply part 14, so that a gas bubble(s) 8 is/are generated in the electrolytic solution 6. A discharge hole 9b has, for example, a diameter of 0.05 mm or greater and 0.5 mm or less, and further, 0.05 mm or greater and 0.1 mm or less. A diameter of the discharge port 9b is thus specified, so that it is possible to reduce a defect of ingress of the electrolytic solution 6 or the powder 7 from the discharge port 9b into a hollow part inside the generation part 9. Furthermore, it is possible to provide a pressure loss that is suitable for generating a gas bubble(s) 8 to a gas that is discharged from the discharge port 9b. Additionally, it is sufficient that a planar shape of the discharge port 9b is, for example, a circular shape or a polygonal shape.

Each of a gas bubble(s) 8 that is/are generated by a gas that is supplied from the discharge port 9b of the generation part 9 to the electrolytic solution 6 floats up in the electrolytic solution 6, between electrodes that are arranged at a predetermined interval(s), and more specifically, between the anode 3a and the diaphragm 4 and between the diaphragm 5 and the anode 3b. A gas that floats up as a gas bubble(s) 8 in the electrolytic solution 6 disappears on a liquid level 6a of the electrolytic solution 6 and composes a gas layer 13 between an upper plate 18 and the liquid level 6a of the electrolytic solution 6.

Herein, an electrode reaction in the secondary battery 1 will be explained by providing, as an example, a nickel-zinc battery where nickel hydroxide is applied as a cathode active material. Each of reaction formulas on the cathode 2 and the anode 3 at a time of charging is as follows.
Cathode:

   Ni(OH)₂ + OH⁻ → NiOOH + H₂O + e⁻
Anode:

   [Zn(OH)₄]²⁻ + 2e⁻ → Zn + 4OH⁻

In general, there is concern that a dendrite that is produced on the anode 3 in association with such a reaction grows to a side of the cathode 2, so that conduction between the cathode 2 and the anode 3 is caused. As is clear from a reaction formula, a concentration of [Zn(OH)₄]²⁻ in neighborhood of the anode 3 is decreased as zinc is deposited on the anode 3 by charging. Then, a phenomenon of decreasing of a concentration of [Zn(OH)₄]²⁻ in neighborhood of a deposited zinc is a factor of growing as a dendrite. That is, [Zn(OH)₄]²⁻ in the electrolytic solution 6 that is consumed at a time of charging is supplied, so that a state where a concentration of [Zn(OH)₄]²⁻ that is a zinc species in the electrolytic solution 6 is high is held. Thereby, growth of a dendrite is reduced, so that a possibility of causing conduction between the cathode 2 and the anode 3 is reduced.

In the secondary battery 1, the powder 7 that includes zinc is mixed in the electrolytic solution 6 and a gas is supplied from the discharge port 9b of the generation part 9 into the electrolytic solution 6 so as to generate a gas bubble(s) 8. Gas bubbles 8 float up in the electrolytic solution 6 from a lower side to an upper side of the container 17 between the anode 3a and the cathode 2 and between the cathode 2 and the anode 3b, respectively.

Furthermore, an upward liquid flow is generated in the electrolytic solution 6 in association with floating up of a gas bubble(s) 8 as described above between electrodes, so that the electrolytic solution 6 flows upward from a side of the inside bottom 10e of the reaction part 10 between the anode 3a and the cathode 2 and between the cathode 2 and the anode 3b. Then, a downward liquid flow is generated mainly between an inner wall 10a of the reaction part 10 and the anode 3a and between an inner wall 10b thereof and the anode 3b, in association with an upward liquid flow of the electrolytic solution 6, so that the electrolytic solution 6 flows from an upper side to a lower side inside the reaction part 10.

Thereby, as [Zn(OH)₄]²⁻ in the electrolytic solution 6 is consumed by charging, zinc in the powder 7 is dissolved so as to follow it, so that the electrolytic solution 6 that contains a high concentration of [Zn(OH)₄]²⁻ is supplied to neighborhood of the anode 3. Hence, it is possible to hold a state where a concentration of [Zn(OH)₄]²⁻ in the electrolytic solution 6 is high, so that it is possible to reduce a possibility of conduction between the cathode 2 and the anode 3 in association with growth of a dendrite.

Additionally, for the powder 7, it is possible to provide metallic zinc, calcium zincate, zinc carbonate, zinc sulfate, zinc chloride, or the like, other than zinc oxide and zinc hydroxide where zinc oxide and zinc hydroxide are preferable.

Furthermore, although Zn is consumed on the anode 3 by charging so as to produce [Zn(OH)₄]²⁻, the electrolytic solution 6 is already in a saturated state thereof, so that ZnO is precipitated from [Zn(OH)₄]²⁻ that is excessive in the electrolytic solution 6. Herein, zinc that is consumed on the anode 3 is zinc that is deposited on a surface of the anode 3 at a time of charging. Hence, a so-called shape change where a surface shape of the anode 3 is changed is not caused, differently from a case where charging and discharging are repeated by using an anode that originally contains a zinc species. Thereby, in the secondary battery 1 according to an embodiment, it is possible to reduce time degradation of the anode 3. Additionally, Zn(OH)₂ or a mixture of ZnO and Zn(OH)₂ is precipitated from [Zn(OH)₄]²⁻ that is excessive, depending on a state of the electrolytic solution 6.

For example, although the powder 7 in the electrolytic solution 6 is mixed in the electrolytic solution 6 so as to be movable therein as described above, there is a possibility that, as an operation of the supply part 14 is stopped, a part of the powder 7 stays on the inside bottom 10e and further plugs the discharge port 9b. Although most of the powder 7 that plugs the discharge port 9b is dispersed in the electrolytic solution 6 again as an operation of the supply part 14 is restarted, a state where a part thereof remains staying on the inside bottom 10e so as to plug the discharge port 9b may be maintained. In a case where the powder 7 thus stays on the inside bottom 10e so as to plug the discharge port 9b, there is a possibility that discharging of a gas from the discharge port 9b is reduced.

Furthermore, for example, as a foreign substance such as a metallic zinc that drops off from the anode 3a and the powder 7 that is aggregated or greatly particle-grown stays on the inside bottom 10e so as to plug the discharge port 9b, discharging of a gas from the discharge port 9b is hindered. Thereby, as smooth circulation of the electrolytic solution 6 is inhibited, there is concern that performance degradation is caused, for example, a dendrite readily grows at a time of charging, or the like.

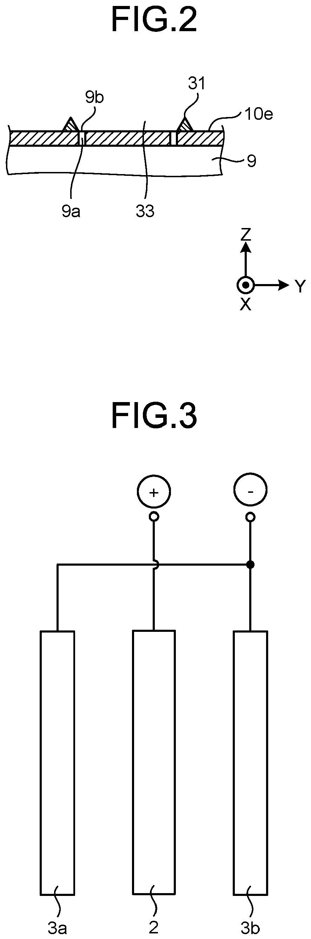

Hence, the secondary battery 1 according to a first embodiment further includes a protrusion part 31 that is disposed at an edge part of the discharge port 9b. Herein, the protrusion part 31 will be explained by using FIG. 2. FIG. 2 is a cross-sectional view that illustrates an outline of the protrusion part 31 that is included in a secondary battery according to a first embodiment. FIG. 2 corresponds to the protrusion part 31 in a cross-sectional view for a ZX-plane that passes through a center of the discharge port 9b. Additionally, FIG. 2 omits illustration of the diaphragms 4, 5, the electrolytic solution 6, the powder 7, and the like for a purpose of simplification of explanation. Furthermore, illustration may also be omitted in another/other drawing(s) that is/are used in an explanation as described later.

The protrusion part 31 is disposed at an edge part of the discharge port 9b, so that it is possible to function as a wall for the discharge port 9b. As a result, it is possible for the protrusion part 31 to reduce staying of a foreign substance that is precipitated in the electrolytic solution 6, at the discharge port 9b, and eventually reduce plugging of the discharge port 9b. Hence, smooth circulation of the electrolytic solution 6 is ensured, so that it is possible to reduce performance degradation, for example, in association with clogging of the discharge port 9b.

For example, it is sufficient that the protrusion part 31 is connected to the inside bottom 10e of the reaction part 10 and is provided so as to extend in upward and downward directions. For example, it is sufficient that a height of the protrusion part 31 is set at 0.1 mm or greater and 10 mm or less. Additionally, upward and downward directions are directions in a case where a direction where a gas bubble(s) float(s) up is provided as "upward".

For the protrusion part 31, a length of a bottom part of the protrusion part 31 that is connected to the inside bottom 10e in a horizontal direction may be less than a length of a tip part of the protrusion part 31 in a horizontal direction. As a result, it is possible to reduce staying of a foreign substance on the protrusion part 31. Additionally, a horizontal direction is a direction along the inside bottom 10e. For example, it is sufficient that a length of the protrusion part 31 in a horizontal direction is set at 5.0 x 10⁻³ mm or greater and 0.5 mm or less.

The protrusion part 31 may be disposed so as to surround the discharge port 9b or may be disposed at a part of an edge part of the discharge port 9b. In a case where the protrusion part 31 is disposed so as to surround the discharge port 9b, it is possible to reduce plugging of the discharge port 9b effectively.

Furthermore, in a case where the protrusion part 31 is disposed at a part of an edge part of the discharge port 9b, the protrusion part 31 may further be disposed at a position where inflow of the electrolytic solution 6 into the discharge port 9b is hindered. If an explanation is provided by FIGS. 1 and 2 as an example, the electrolytic solution 6 flows so as to rise from a central part of the reaction part 10 and fall from a wall part of the reaction part 10 in FIGS. 1 and 2, where, in such a case, it is sufficient that, for example, it is disposed at a position that is close to a wall of the reaction part 10. As a result, it is possible to effectively reduce plugging of the discharge port 9b by a foreign substance that moves along a flow of the electrolytic solution 6.

Additionally, although the protrusion part 31 is integrated with the inside bottom 10e by bonding, joining or the like of separate bodies that are preliminarily formed so that it is possible to fabricate the secondary battery 1, a processing method is not limited particularly.

By returning to FIG. 1, the secondary battery 1 according to an embodiment will further be explained. The supply part 14 supplies, to the generation part 9 via a pipeline 15, a gas that is recovered from an inside of the container 17 via a pipeline 16. The supply part 14 is, for example, a pump (a gas pump), compressor, or blower that is capable of transferring a gas. If a gas tightness of the supply part 14 is increased, degradation of performance of power generation of the secondary battery 1 that is caused by leaking a gas or a water vapor that originates from the electrolytic solution 6 to an outside thereof is not readily caused.

The protrusion part 31, the container 17, and the upper plate 18 are composed of, for example, a resin material that has an alkali resistance and an insulation property such as polystyrene, polypropylene, polyethylene terephthalate, or polytetrafluoroethylene. Although a visor member 30, the container 17, and the upper plate 18 are preferably composed of mutually identical materials, they may be composed of different materials.

Next, connection between electrodes in the secondary battery 1 will be explained. FIG. 3 is a diagram that explains an example of connection between electrodes of the secondary battery 1 according to a first embodiment.

As illustrated in FIG. 3, the anode 3a and the anode 3b are connected in parallel. Thus, anodes 3 are connected in parallel, so that it is possible to connect and use respective electrodes of the secondary battery 1 suitably even in a case where total numbers of a cathode(s) 2 and an anode(s) 3 are different.

Furthermore, the secondary battery 1 according to a first embodiment includes the anodes 3a, 3b that are arranged so as to interpose the cathode 2 therebetween and face one another. Thus, in the secondary battery 1 where two anodes 3a, 3b correspond to one cathode 2, a current density per one anode is decreased as compared with a secondary battery where a cathode 2 and an anode 3 correspond on 1:1 basis. Hence, in the secondary battery 1 according to a first embodiment, generation of a dendrite on the anodes 3a, 3b is further reduced, so that it is possible to further reduce conduction between the anodes 3a, 3b and the cathode 2.

Additionally, although three electrodes in total in the secondary battery 1 as illustrated in FIG. 1 are configured in such a manner that the anodes 3 and the cathode 2 are arranged alternately, this is not limiting and each of a cathode 2 and an anode 3 may be arranged one by one. Furthermore, although the secondary battery 1 as illustrated in FIG. 1 is configured in such a manner that both ends are the anodes 3, this is not limiting and it may be configured in such a manner that both ends are cathodes 2.

### <Second Embodiment>

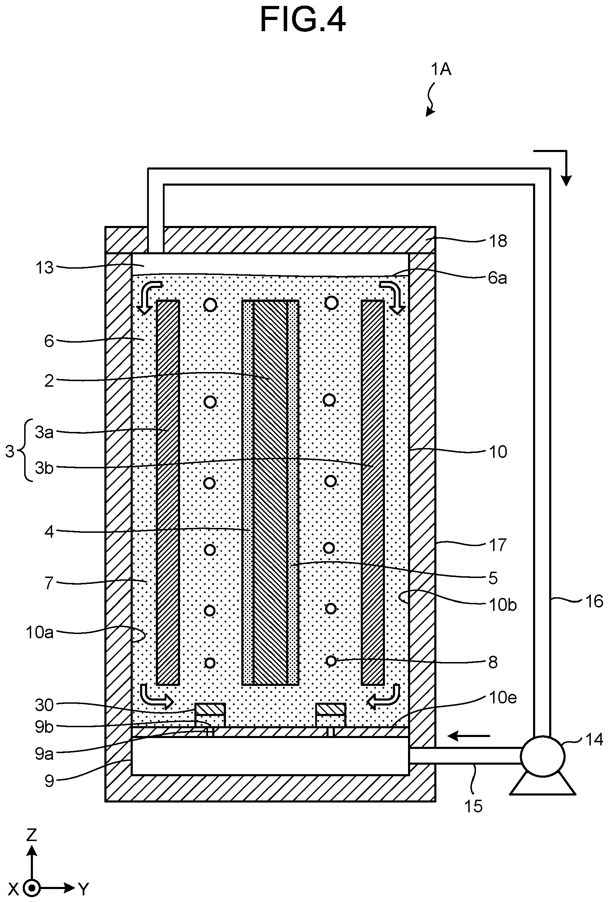

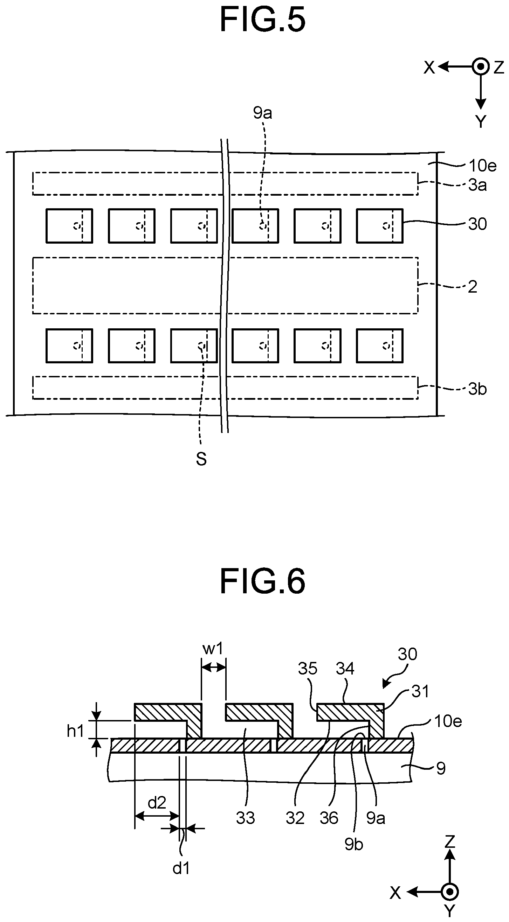

FIGS. 4 to 6 are diagrams that illustrate an outline of a secondary battery according to a second embodiment. A secondary battery 1A as illustrated in FIGS. 4 to 6 is different from the secondary battery 1 according to a first embodiment in that a visor member 30 is included instead of the protrusion member 31. Additionally, FIG. 4 is a diagram that illustrates an outline of a secondary battery according to a second embodiment. FIG. 5 is a top view that illustrates an outline of a visor member that is included in a secondary battery according to a second embodiment. FIG. 6 is a cross-sectional view that illustrates an outline of a visor member that is included in a secondary battery according to a second embodiment. FIG. 5 corresponds to a plan view of a reaction part 10 that is possessed by the secondary battery 1A as illustrated in FIG. 4, from a side of an upper plate 18. Furthermore, FIG. 6 corresponds to a cross-sectional view of the visor member 30 as illustrated in FIG. 5 in a ZX-plane that passes through a center of a discharge port 9b.

A plurality of visor members 30 are arranged at a predetermined interval(s) so as to be along a direction of an X-axis. A visor member 30 has a fixation part 31 and a visor part 34 that is disposed at a tip part of the fixation part 31. The fixation part 31 is fixed on an inside bottom 10e. The visor part 34 is arranged so as to overlap with the discharge port 9b in a plan view. In other words, the visor part 34 has a receiving surface 32 that overlaps with the discharge port 9b, and additionally, it is possible to regard the fixation part 31 as the protrusion part 31 in a first embodiment.

For example, as a foreign substance such as metallic zinc that falls off an anode 3 and a powder 7 that is aggregated or greatly particle-grown stays on the inside bottom 10e so as to plug the discharge port 9b in a case where the visor member 30 is not possessed, discharging of a gas from the discharge port 9b is hindered. Thereby, as smooth circulation of an electrolytic solution 6 is inhibited, there is concern that performance degradation is caused, for example, a dendrite is readily grown at a time of charging, or the like.

On the other hand, as the visor member 30 is arranged on the inside bottom 10e in such a manner that the visor part 34 covers the discharge port 9b in a plan view, a foreign substance that is precipitated in the electrolytic solution 6 stays on the visor part 34, so that plugging of the discharge port 9b is reduced. Hence, smooth circulation of the electrolytic solution 6 is ensured, so that it is possible to reduce performance degradation, for example, in association with clogging of the discharge port 9b.

Furthermore, a receiving surface 32 is arranged so as to overlap with a whole of the discharge port 9b in a plan view. Specifically, the receiving surface 32 is arranged so as to face the inside bottom 10e across a height h1. A gas bubble(s) 8 that is/are generated by a gas that is discharged from the discharge port 9b move(s) in a space 33 between the receiving surface 32 and the inside bottom 10e from a side of a proximal end part 36 along a direction of an X-axis, and further float(s) up between an end part 35 and an adjacent visor member 30.

For example, an amount of a gas that is supplied from a supply part 14 (see FIG. 4) varies in a case where a gas bubble(s) 8 directly float(s) up in the electrolytic solution 6 without the receiving surface 32 of the visor member 30, a floating speed of a gas that is discharged into the reaction part 10, that is, a gas bubble(s) 8 may be dispersed. On the other hand, in the secondary battery 1 according to a second embodiment, a gas bubble(s) 8 is/are decelerated on the receiving surface 32 and in the space 33 and subsequently float(s) up, so that it is possible to reduce a dispersion of a floating speed(s) of the gas bubble(s) 8.

Herein, it is possible to provide a length d2 from the end part 35 of the receiving surface 32 to the discharge port 9b in a horizontal direction that is a diameter d1 of the discharge port 9b or greater. Thereby, a gas bubble(s) 8 that is/are discharged from the discharge port 9b is/are readily interfered by the receiving surface 32, so that it is possible to reduce a dispersion of a floating speed(s) of the gas bubble(s) 8 more reliably. On the other hand, as a length d2 exceeds 3 times a diameter d1, a plurality of gas bubbles 8 are united while staying on the receiving surface 32, so that a dispersion of a floating speed(s) of a gas bubble(s) 8 that float(s) up in the electrolytic solution 6 is readily caused. Hence, it is possible to provide a length d2 that is 3 times a diameter d1 or less.

Furthermore, it is possible to provide an area of the space 33 that is interposed between the receiving surface 32 and the inside bottom 10e in a side view in a width direction (a Y-direction) of the receiving surface 32 (that is, a height h1 x a length d2) that is 10 times a cross-sectional area S of the discharge port 9b or greater. Thereby, even in a case where a flow rate of a gas that is discharged from the discharge port 9b is large, it is possible to generate a gas bubble(s) 8.

Furthermore, it is possible to provide a gap w1 between adjacent visor members 30 in a direction of an X-axis that is, for example, 3 times a diameter d1 of the discharge port 9b or greater, in particular, 6 times or greater and 30 times or less. Thereby, it is possible to cause a gas bubble(s) 8 to float up to a more suitable position (s) .

### <First Variation>

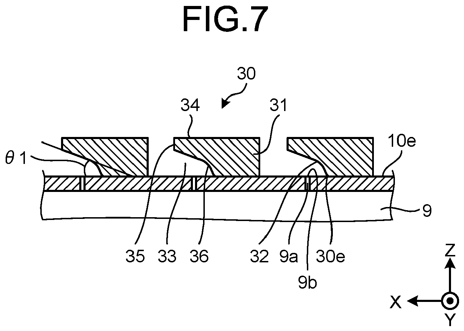

FIG. 7 is a cross-sectional view that illustrates an outline of a visor member that is included in a secondary battery according to a first variation of a second embodiment. For a visor member 30 as illustrated in FIG. 7, a discharge port 9b is arranged so as to separate from a proximal end 30e toward a side of a positive direction of an X-axis. Thereby, it is possible to generate a gas bubble(s) 8 that is/are dependent on a shape of the discharge port 9b more reliably while a gas that is discharged from the discharge port 9b is not inhibited by a proximal end part 36 and the proximal end 30e. Furthermore, even in a case where misalignment is caused in a process of assembly of the visor member 30, it is possible to reduce a decrease of a yield that is caused by a manufacturing defect.

Furthermore, a receiving surface 32 of the visor member 30 as illustrated in FIG. 7 is sloped. Specifically, it has a sloping surface with an upward slope from a side of the discharge port 9b toward a side of an end part 35. As the receiving surface 32 is thus sloped, a plurality of gas bubbles 8 do not stay on the receiving surface 32 but float up sequentially, so that it is possible to reduce a dispersion of a floating speed(s) of a gas bubble(s) 8 in association with staying of the gas bubble(s) 8. Herein, it is possible to provide an angle θ1 of a sloping surface as, for example, 0° < θ1 ≤ 30°, in particular, 5° ≤ θ1 ≤ 30°. As θ1 exceeds 30°, a gas bubble(s) 8 does/do not stay on the receiving surface 32, so that a dispersion of a floating speed(s) of the gas bubble(s) 8 is not readily reduced.

### <Second Variation>

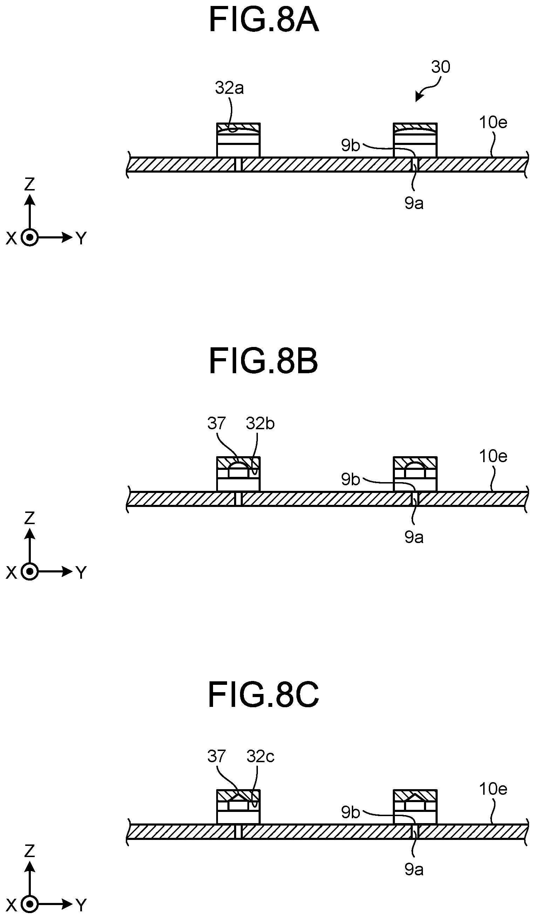

FIG. 8A to FIG. 8C are cross-sectional views that illustrate an outline of a visor member that is included in a secondary battery according to a second variation of a second embodiment. Each of visor members 30 as illustrated in FIG. 8A to FIG. 8C corresponds to the visor member 30 as illustrated in FIG. 7 in a cross-sectional view for a YZX-plane that passes through a center of a discharge port 9b. A receiving surface 32a of a visor member 30 as illustrated in FIG. 8A has an upward convex curved surface. Furthermore, each of visor members 30 as illustrated in FIG. 8B and FIG. 8C has a groove part 37 with a U-shape or a V-shape that extends from a part that overlaps with the discharge port 9b in a plan view to a side of an end part of a receiving surface 32b, 32c. As a shape of a receiving surface is thus processed, a gas bubble(s) 8 does/do not readily stay on the receiving surface, so that it is possible to reduce a dispersion of a floating speed(s) of a gas bubble(s) 8 in association with staying of the gas bubble(s) 8. Additionally, a shape of a receiving surface is not limited to illustrated ones, and for example, the groove part 37 as illustrated in FIG. 8B or FIG. 8C may be provided on the receiving surface 32a in FIG. 8A.

### <Third to Fifth variations>

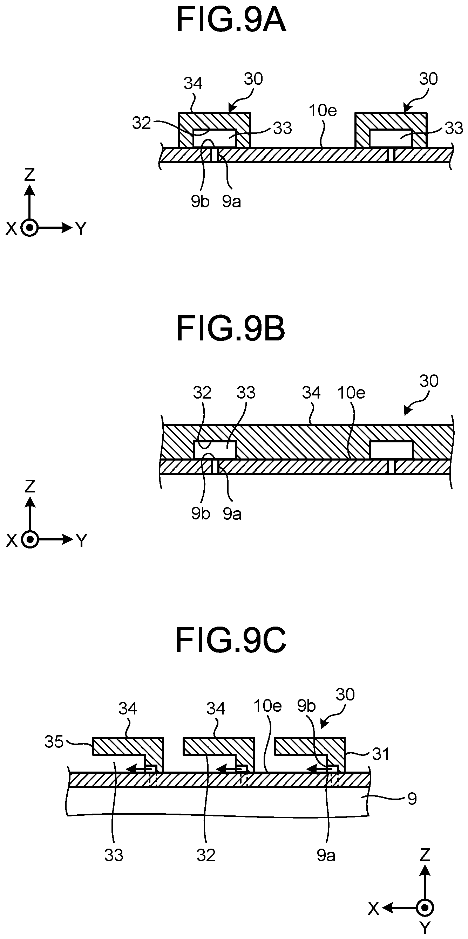

FIG. 9A to FIG. 9C are cross-sectional views that illustrate outlines of visor members that are included in secondary batteries according to third to fifth variations of a second embodiment. For a visor member 30 as illustrated in FIG. 9A, a space 33 is interposed between not only upward and downward directions but also both sides of a direction of a Y-axis. Thereby, positional accuracy of a gas bubble(s) 8 that float(s) up in an electrolytic solution 6 in a direction of a Y-axis is further improved.

For a visor member 30 as illustrated in FIG. 9B, a visor part 34 extends on a plurality of discharge ports 9b that are aligned in a direction of a Y-axis. Thereby, assembly of the visor member 30 is facilitated.

Furthermore, in FIG. 9C, a discharge port 9b is opened in a horizontal direction. Thereby, even in a case where a powder 7 or a foreign substance is precipitated in an electrolytic solution 6, the discharge port 9b is further prevented from being readily plugged. Hence, smooth circulation of the electrolytic solution 6 is ensured, so that it is possible to further reduce performance degradation in association with clogging of the discharge port 9b. Additionally, a direction of opening of the discharge port 9b is not limited to a horizontal direction and it is sufficient to be a direction with a depression angle of 0° or greater.

### <Sixth and Seventh Variations>

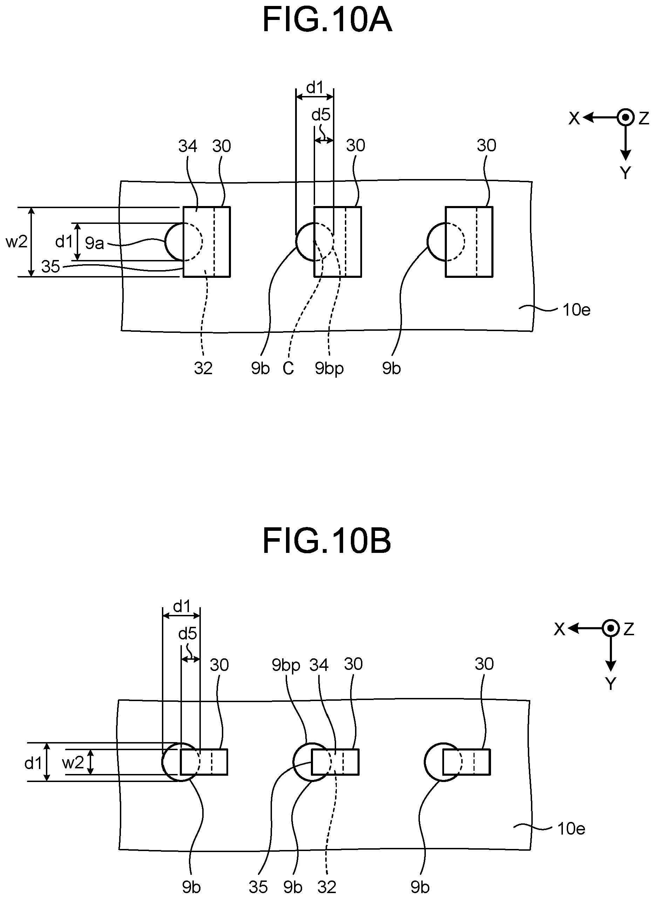

Although the embodiment(s) as described above has/have been explained in such a manner that the receiving surface 32 of the visor member 30 is arranged so as to overlap with a whole of the discharge port 9b in a plan view, this is not limiting. FIG. 10A and FIG. 10B are cross-sectional views that illustrate outlines of visor members that are included in secondary batteries according to sixth and seventh variations of a second embodiment.

For visor members 30 as illustrated in FIG. 10A and FIG. 10B, a receiving surface 32 is arranged so as to overlap with a region from a peripheral part 9bp to a center C of a discharge port 9b in a plan view. Specifically, an end part 35 of a visor member 30 is positioned in such a manner that a length d5 of the receiving surface 32 that overlaps with the discharge port 9b in a plan view along a direction of an X-axis and a diameter d1 of the discharge port 9b provide a relation of d5 ≥ 0.5 x d1. Thereby, a gas bubble(s) 8 that is/are generated by a gas that is discharged from the discharge port 9b is/are interfered by the receiving surface 32 and subsequently float(s) up, so that it is possible to reduce a dispersion of a floating speed(s) of the gas bubble(s) 8.

Furthermore, as illustrated in FIG. 10A, for the visor member 30, a width w2 of a visor part 34 along a direction of a Y-axis may be greater than a diameter d1 of the discharge port 9b. Furthermore, as illustrated in FIG. 10B, a width w2 may be less than a diameter d1. In particular, if w2 ≥ w1 is provided, it is possible to reduce performance degradation in association with clogging of the discharge port 9b.

### <Third Embodiment>

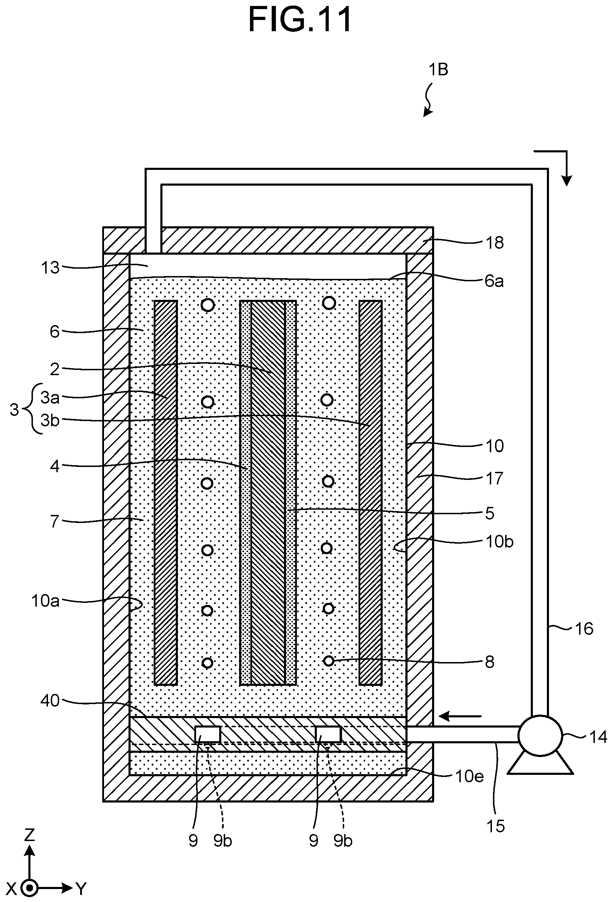

FIG. 11 is a diagram that illustrates an outline of a secondary battery according to a third embodiment. A secondary battery 1B as illustrated in FIG. 11 is different from the secondary embodiment 1 according to another/other embodiment(s) in that a generation member 40 is included instead of the visor member 30 according to a second embodiment.

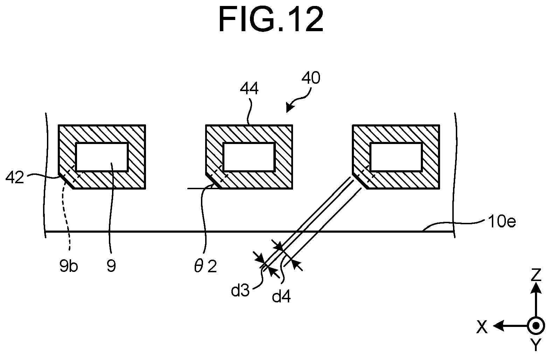

FIG. 12 is a cross-sectional view that illustrates an outline of a generation member that is included in a secondary battery according to a third embodiment. A generation member 40 has a generation part 9, a discharge port 9b, a receiving surface 42, and a visor part 44. The discharge port 9b discharges a gas in a direction with a depression angle, that is, a downward direction relative to a horizontal plane so as to generate a gas bubble(s) 8. Hence, even in a case where a powder 7 or a foreign substance is precipitated, smooth circulation of an electrolytic solution 6 is ensured, so that it is possible to further reduce performance degradation in association with clogging of the discharge port 9b.

Furthermore, a gas bubble(s) 8 that is/are generated by a gas that is discharged from the discharge port 9b in a direction with a depression angle once stop(s) and subsequently float(s) up. Hence, a floating speed(s) of a gas bubble(s) 8 does/do not readily depend on a discharge amount or a discharge speed of a gas from the discharge port 9b, so that a dispersion thereof is reduced.

Furthermore, the receiving surface 42 extends in a radial direction of the discharge port 9b. Herein, as a width d3 of the receiving surface 42 in a radial direction thereof is greater than a diameter d4 of the discharge port 9b, a gas bubble(s) 8 is/are interfered by the receiving surface 42 and subsequently float(s) up, so that it is possible to further reduce a dispersion of a floating speed(s) of the gas bubble(s) 8.

On the other hand, as a width d3 of the receiving surface 42 in a radial direction thereof is 3 times a diameter d4 of the discharge port 9b or less, a defect of a plurality of gas bubbles 8 that are united on the receiving surface 42 so as to increase sizes thereof excessively is reduced.

Additionally, it is possible to provide an angle θ2 of the receiving surface 42 as, for example, 0° < θ2 ≤ 30°, in particular, 5° ≤ θ2 ≤ 30°. As θ2 exceeds 30°, a gas bubble(s) 8 does/do not stay on the receiving surface 32, so that a dispersion of a floating speed(s) of the gas bubble(s) 8 is not readily reduced.

Although an embodiment(s) of the present invention has/have been explained above, the present invention is not limited to the embodiment(s) as described above and a variety of modifications are possible without departing from the spirit thereof. For example, although an explanation has been provided in the embodiment(s) as described above in such a manner that the powder 7 is mixed in the electrolytic solution 6, this is not limiting and it does not have to have the powder 7. In such a case, it is preferable to increase an amount of an anode active material that is contained in the anode 3.

Furthermore, although an explanation has been provided in the embodiment(s) as described above in such a manner that the diaphragms 4, 5 are arranged so as to interpose both sides of the cathode 2 in a thickness direction thereof, this is not limiting and the cathode 2 may be covered thereby. Furthermore, the diaphragms 4, 5 do not have to be arranged.

Furthermore, although an explanation has been provided in the embodiment(s) as described above in such a manner that the discharge ports 9b are arranged between the cathode 2 and the anode 3 in a plan view, this is not limiting and they may be arranged, for example, between the inner wall 10a of the reaction part 10 and the anode 3a and between the anode 3b and the inner wall 10b, respectively, in a plan view. In such a case, the visor member 30 or the generation member 40 are arranged in such a manner that a gas bubble(s) 8 float(s) up between the inner wall 10a and the anode 3a and between the anode 3b and the inner wall 10b.

Additionally, although it is preferable that the supply part 14 is constantly operated from a viewpoint of prevention of clogging of the discharge port 9b, a supply rate of a gas at a time of discharging may be less than that at a time of charging from a viewpoint of reducing power consumption.

It is possible for a person(s) skilled in the art to readily derive an additional effect(s) and/or variation(s). Hence, a broader aspect(s) of the present invention is/are not limited to a specific detail(s) and a representative embodiment(s) as illustrated and described above. Therefore, various modifications are possible without departing from the spirit or scope of a general inventive concept that is defined by the appended claim(s) and an equivalent(s) thereof.

### Reference Signs List

1, 1A, 1B secondary battery
2 cathode
3, 3a, 3b anode
4, 5 diaphragm
6 electrolytic solution
7 powder
8 gas bubble
9 generation part
9a communicating hole
9b discharge port
10 reaction part
14 supply part
17 container
30 visor member
40 generation member

## Claims

1. A secondary battery **characterized by** comprising:
a container that has an opening on a bottom surface thereof;
an electrolytic solution that is disposed in the container;
a cathode and an anode that are disposed in the electrolytic solution; and
a flow mechanism that has a generation part that is connected to the container via the opening and generates a gas bubble(s) in the container through the opening, and that causes the electrolytic solution to flow,
wherein a protrusion part that is positioned at an edge part of the opening and extends in upward and downward directions is disposed on the bottom surface.

2. The secondary battery according to claim 1, **characterized by** having
a visor member that has the protrusion part and a receiving surface that is disposed at a tip part of the protrusion part and overlaps with the opening in a plan view thereof.

3. The secondary battery according to claim 2, **characterized in that** the receiving surface overlaps with a region from a peripheral part to a center of the opening in a plan view thereof.

4. The secondary battery according to claim 2 or 3, **characterized in that** a length from an end part of the receiving surface to the opening in a horizontal direction is a diameter of the opening or greater.

5. The secondary battery according to any one of claims 2 to 4, **characterized in that** a length from an end part of the receiving surface to the opening in a horizontal direction is 3 times a diameter of the opening or less.

6. The secondary battery according to any one of claims 2 to 5, **characterized in that** an area of a space that is interposed between the receiving surface and a placing surface for the visor member in a side view from a width direction of the receiving surface is 10 times a diameter of the opening or greater.

7. The secondary battery according to any one of claims 2 to 6, **characterized in that** the receiving surface has a sloping surface with an upward slope from a side of the opening toward a side of an end part of the receiving surface.

8. The secondary battery according to claim 7, **characterized in that** an angle θ1 of the sloping surface is 0° < θ1 ≤ 30°.

9. The secondary battery according to claim 7 or 8, **characterized in that** the receiving surface has a upward convex curved surface that extends from a part that overlaps with the opening in a plan view toward a side of an end part of the receiving surface.

10. The secondary battery according to claim 7 or 8, **characterized in that** the receiving surface has a groove part that extends from a part that overlaps with the opening in a plan view toward a side of an end part of the receiving surface.

11. The secondary battery according to any one of claims 2 to 10, **characterized in that**:
the visor member is arranged between the cathode and the anode in a plan view; and
the receiving surface extends along a width direction of the anode.

12. The secondary battery according to any one of claims 2 to 11, **characterized in that**:
a plurality of the receiving surfaces are arranged in a width direction of the anode; and
the opening is arranged on each of the receiving surfaces.

13. The secondary battery according to any one of claims 2 to 12, **characterized in that** the opening discharges a gas in a direction with a depression angle of 0° or greater.

14. The secondary battery according to any one of claims 1 to 13, **characterized in that** a length of a bottom part of the protrusion part that is connected to the bottom surface in a horizontal direction is less than a length of a tip part thereof in a horizontal direction.

15. A secondary battery **characterized by** comprising:
a container;
an electrolytic solution that is disposed in the container;
a cathode and an anode that are disposed in the electrolytic solution; and
a flow mechanism that causes the electrolytic solution to flow, wherein
the flow mechanism includes a supply part that supplies a gas and a generation member that is disposed from an outside of the container to an inside of the container and has an opening that is positioned below the cathode and the anode in the container, is connected to the supply part, and discharges a gas in a direction with a depression angle to generate a gas bubble(s) in the electrolytic solution.

16. The secondary battery according to claim 15, **characterized in that**:
the generation member includes a receiving surface that extends in a radial direction of the opening; and
a width of the receiving surface in the radial direction is greater than a diameter of the opening.

17. The secondary battery according to claim 16, **characterized in that** a width of the receiving surface in the radial direction is 3 times a diameter of the opening or less.

18. The secondary battery according to claim 15 or 17, **characterized in that** an angle θ2 of the receiving surface is 0° < θ2 ≤ 30°.

19. The secondary battery according to any one of claims 15 to 18, **characterized in that** the opening is arranged between the cathode and the anode in a plan view and discharges the gas along a width direction of the anode.

20. The secondary battery according to any one of claims 1 to 19, **characterized by** further comprising
a powder that includes zinc and is mixed in the electrolytic solution to be movable therein.
